# EUROPEAN PATENT SPECIFICATION

(11) **EP 2 711 821 B1**
(45) Date of publication and mention of the grant of the patent: **31.10.2018**
(21) Application number: 13185693.2
(22) Date of filing: 24.09.2013
(51) Int. Cl.: G06F 3/0481, G06F 3/0488

(54) **Apparatus and method for controlling split view in portable device**
Vorrichtung und Verfahren zur Steuerung einer geteilten Ansicht in einem tragbaren Endgerät
Appareil et procédé de contrôle de vue fendue dans un dispositif portable

(30) Priority: 25.09.2012 KR 20120106802
(43) Date of publication of application: 26.03.2014
(73) Proprietor: Samsung Electronics Co., Ltd., Gyeonggi-do 443-742 (KR)
(72) Inventor: Kim, Youngri, 433-742 Gyeonggi-do (KR); Han, Bonghee, 443-742 Gyeonggi-do (KR); Yoon, Sungjin, 443-742 Gyeonggi-do (KR); Lee, Yujin, 443-742 Gyeonggi-do (KR); Park, Wonkyu, 443-742 Gyeonggi-do (KR)
(74) Representative: HGF Limited

(56) References cited:
- WO-A1-2010/110613
- US-A1- 2012 176 322
- Nirmal Balachandran: "How to Enable Split View on Windows 8 for Metro Apps", , 8 March 2012 (2012-03-08), XP055092621, Retrieved from the Internet: URL:http://www.nirmaltv.com/2012/03/08/ena ble-split-view-on-windows-8-for-metro-apps / [retrieved on 2013-12-10]

## Description

### BACKGROUND OF THE INVENTION

### 1. Field of the Invention:

The present disclosure relates to a Multi-window environment of a portable device. More particularly, the present disclosure relates to a method for controlling an application area which is aligned as a 1/N Split in a screen with ease.

### 2. Description of the Related Art:

Generally, a portable device may process various functions, such as a communication and a multimedia, and may process two or more applications. In this case, a display method of an application processes the applications other than the currently running application as a background layer. However, in the above case, a complex key or a touch interaction should be performed in order to execute the application which is processed as a background.

In addition, the portable device of the related art performs various functions, and a display unit becomes larger to display a multimedia data efficiently. In this case, the display unit may split to display two or more application views on the display unit. Here, a plurality of execution views of the applications are split to be displayed, and the screen size has a fixed value. In other words, a split view display method of the related art is provided as a fixed layout, therefore, has a problem that an area control between the applications is not provided.

Therefore, a need exists for an apparatus and a method for controlling a display area of a split application to display a plurality of applications as a split view in a portable device.

The above information is presented as background information only to assist with an understanding of the present disclosure. No determination has been made, and no assertion is made, as to whether any of the above might be applicable as prior art with regard to the present disclosure.
US2012/0176322 describes a method of presenting multiple frames on a touch screen. The method includes detecting multiple touch locations on a touch screen of an electronic device for at least an activation time and splitting a display area of the touch screen into a first frame and a second frame based on the multiple touch locations XP055092621 describes split view for metro Apps.
WO2010/110613 A1 describes a method and mobile terminal capable of supporting divided screen areas. The method includes: generating input signals for one of sequentially and simultaneously activating a plurality of user functions; activating the user functions according to generated input signals; dividing a screen into divided screen areas that correspond to activated user functions; and outputting functional view areas associated with the activated user functions to the corresponding divided screen areas.

### SUMMARY OF THE INVENTION

Aspects of the present disclosure are to address at least the above-mentioned problems and/or disadvantages and to provide at least the advantages described below. Accordingly, an aspect of the present disclosure is to provide an apparatus and a method for controlling a display area of a split application to display a plurality of applications as a split view in a portable device.

In accordance with an aspect of the present disclosure, a method as set out in claim 1 is provided.

In accordance with another aspect of the present disclosure, an apparatus as set out in claim 10 is provided.

Other aspects, advantages, and salient features of the disclosure will become apparent to those skilled in the art from the following detailed description, which, taken in conjunction with the annexed drawings, discloses exemplary embodiments of the disclosure.

### BRIEF DESCRIPTION OF THE DRAWINGS

The above and other aspects, features, and advantages of certain exemplary embodiments of the present disclosure will be more apparent from the following description taken in conjunction with the accompanying drawings, in which:
FIG. 1 is a diagram illustrating a configuration of a portable device according to an exemplary embodiment of the present disclosure;
FIG. 2 is a diagram illustrating a method for controlling a size of a main screen in a state of displaying a plurality of applications in a portable device by configuring as a split view on a single layer according to an exemplary embodiment of the present disclosure;
FIG. 3 is a flowchart illustrating a procedure of controlling a split view in a portable device according to an exemplary embodiment of the present disclosure;
FIG. 4 is a flowchart illustrating a procedure of setting a split view according to an exemplary embodiment of the present disclosure;
FIGS. 5A and 5B are diagrams illustrating procedures of setting a split view according to an exemplary embodiment of the present disclosure;
FIG. 6 is a flowchart illustrating a procedure of changing a screen according to a screen change request according to an exemplary embodiment of the present disclosure;
FIGS. 7A through 7C are diagrams illustrating procedures of controlling a main screen of an app which has been selected as a set size according to an exemplary embodiment of the present disclosure; and
FIGS. 8A through 8D are diagrams illustrating procedures of variably setting a size of a main screen of a selected app according to an exemplary embodiment of the present disclosure.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the disclosure as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of exemplary embodiments of the present disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

A portable device according to an exemplary embodiment of the present disclosure may configure to display at least two or more applications as a split view and may allow to control a screen area adjacent to a boundary line simultaneously by a single operation during use by splitting a screen in a terminal where a split view is possible. Here, two or more screens in the split view exist in the same layer, and may have an executing function related to the split view. The split view is selected by a user and may be displayed as a main screen and a sub screen and a selection of the main screen may be performed by moving a touch interaction or a boundary line of a screen. The main screen is a screen where a user displays the selected application relatively large compared to other applications and the unselected split view of an application (hereinafter, referred as a sub screen) may have a size which is distinguishable, and the sub screen may be displayed as a name, an icon and/or a symbol, and the like, of the corresponding application.

In the following description, the split view will be used as a term referring to a screen where a plurality of (at least two) applications are split to be displayed on a single layer. According to an exemplary embodiment of the present disclosure, the split view may be configured to one main screen and at least one sub screen. Here, the main screen is a screen for the user to display an execution of the selected application, and the sub screen may be a screen related to the application displayed on the main screen, or selected by the user, or a screen set as a default (by a manufacturer and/or the user). In addition, a term 'touch interaction' refers to a hand (finger) touch and a pen touch input which is generated by a user in a first input unit 140 or a second input unit 150. In addition, in the following description, an application will be used by being mixed with an app.

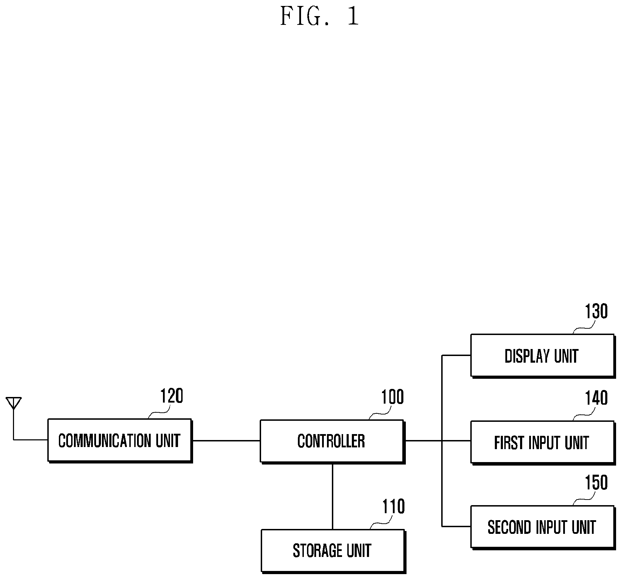

FIG. 1 is a diagram illustrating a configuration of a portable device according to an exemplary embodiment of the present disclosure. Here, the portable device may be a digital device, such as a mobile phone including a smart phone, a Motion Pictures Expert Group (MPEG-1 or MPEG-2) Audio Layer 3 (MP3) terminal, a tablet Personal Computer (PC), a computer, and the like.

Referring to FIG. 1, a communication unit 120 performs a wireless communication function with a base station or another device. Here, the communication unit 120 may be configured with a transmission unit which performs a frequency up-conversion and an amplification of the transmitting signal, and a receiving unit which performs a low noise amplification and a frequency downconversion of a receiving signal. In addition, the communication unit 120 may be equipped with a modulation unit and a demodulation unit. Here, the modulation unit modulates the transmitted signal and delivers the modulated signal to the transmission unit, and the demodulation unit demodulates the signal received through the receiving unit. In this case, the modulation-demodulation unit may be a Long Term Evolution (LTE), a Wideband Code Division Multiple Access (WCDMA), and a Global System for Mobile communications (GSM), and the like, and further be a Wireless-Fidelity (WiFi), a Wireless Broadband (WIBRO), a Near Field Communication (NFC), a Bluetooth, and the like. According to an exemplary embodiment of the present disclosure, it is assumed that the communication unit 120 is equipped with an LTE, a WIFI, and a Bluetooth communication unit.

A controller 100 controls an overall operation of a portable device, and may display at least two or more applications as a split view. The split view controls a size of a screen area adjacent to a boundary line during use according to a command of a user. The controller 100 controls two or more screens to exist on the same layer.

A storage unit 110 may be equipped with an operation program of a terminal and a program memory which stores a program, the tables to operate the terminal, and data memory which stores data which is generated during a program performance.

A display unit 130 displays executing application information under the control of the controller 100. The display unit 130 may be a Liquid Crystal Display (LCD) or an Organic Light Emitting Diode (OLED). A first input unit 140 may be implemented as a capacitive type or a resistive type, and outputs a position information of a user's touch (hereinafter, assumed as a finger touch) to the controller 100. A second input unit 150 may be equipped with an ElectroMagnetic Radiation (EMR) sensor pad, and outputs to the controller 100 by detecting a pen touch input. The first input unit 140 and/or the second input unit 150 generates a touch interaction or a command to control a size of the split view by the user's input. Here, the display unit 130, the first input unit 140 (i.e., a touch panel), and the second input unit 150 (i.e., an EMR panel) may be configured as an integral.

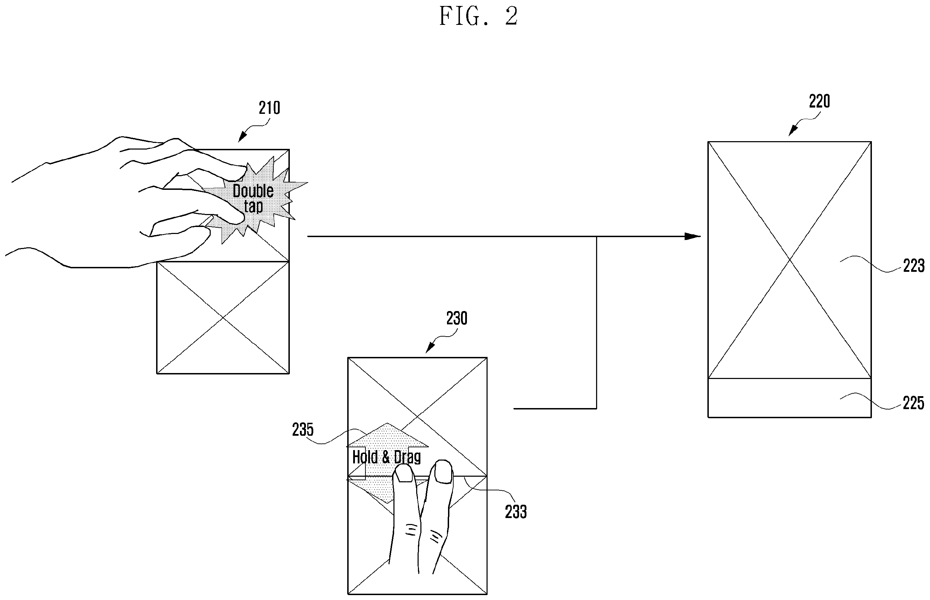

FIG. 2 is a diagram illustrating a method for controlling a size of a main screen in a state of displaying a plurality of applications in a portable device by configuring as a split view on a single layer according to an exemplary of the present disclosure.

Referring to FIG. 2, in a split view area of the Apps which is aligned to be displayed as 1/N Split on the display unit 130, a layout may be controlled to fit to a user's intent by a single operation of the first input unit 140 and/or the second input unit 150 generated by the user.

First, as shown in 210 of FIG. 2, in the state where two apps are provided, an App located on the split view, which is displayed as an up-and-down (or a left and right) screen, is selected to be displayed as a main screen.

In an exemplary embodiment of the present disclosure, when tapping a specific app display area among the apps which are displayed in the split view, the tapped app display area may be displayed as the main screen 223 as shown in 220 of FIG. 2. In addition, as shown in 230, when performing a drag & drop operation to an intended direction as shown in 235 in a boundary position between the App display areas 233 in the state of displaying two Apps as a split view on a single layer 210, the controller 100 extends the selected app screen as the main screen by extending the displaying split view to a drag direction.

Here, a sub screen 225 may be fixed to preset as a minimum control area at the time of a controlling a layout, or may be controlled to be smaller than the minimum area. Here, the minimum control area, until a minimum area where the App which is displayed as the sub screen may be used, means an area having an App screen type, and when it becomes smaller than the minimum area, it is converted into an icon or a minimized type so that the App may be identified even in the small area.

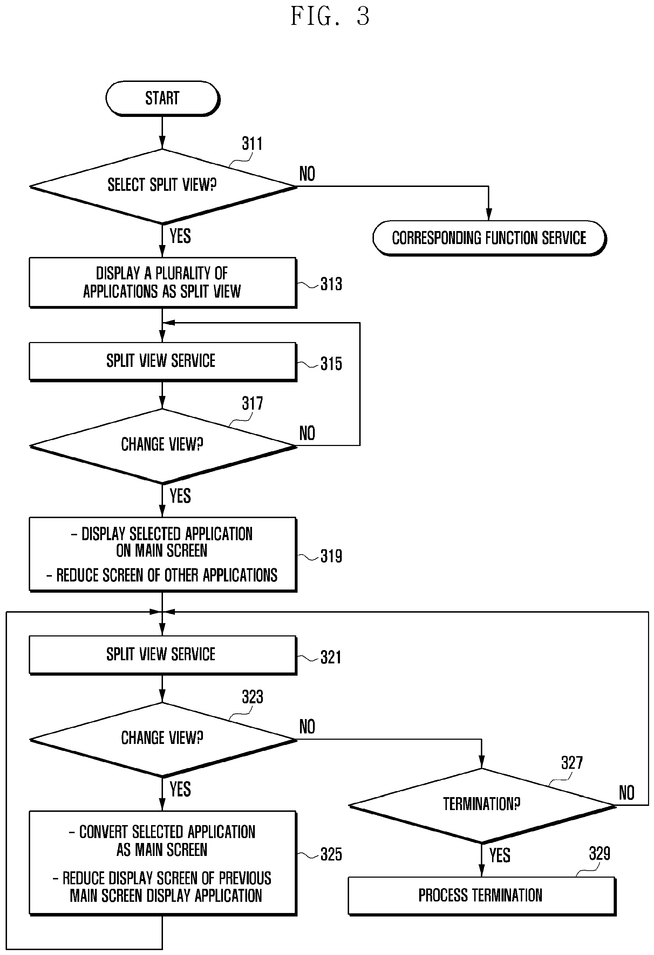

FIG. 3 is a flowchart illustrating a procedure of controlling a split view in a portable device according to an exemplary embodiment of the present disclosure.

Referring to FIG. 3, the portable device provides a number, N, of the Apps as an overlay of a stack type. In such state, the user or the controller 100 may select the apps to be displayed in the split view. In addition, when the apps for selecting in the split view is selected, the controller 100 detects thereof in step 311, and displays a plurality of selected or set apps on the display unit 130 as a split view on a single layer
in step 313. In step 315, the apps to be displayed in the split view may be the apps selected by the user, or set by an App conversion task information of an executing app, or set by a manufacturer or a user. In the state where the split view is displayed as above, the controller 100 performs a split view service while displaying each app on the screen of the corresponding split position.

When the user requests a screen change in the state above, the controller 100 detects the request in step 317 and extends to a set size to display the split view of the selected app as a main screen and, simultaneously, displays another app screen as a sub screen after reducing the other app screen displayed in the split view in step 319. Here, the screen change selection generates a touch interaction (hereinafter, assumed as a touch using at least two fingers) which has a type set in a specific app display area being displayed in the split view as illustrated in FIG. 2, or may be a touch interaction to move (hereinafter, assumed as a drag & drop operation) a boundary of the split view. In the state above, the app selected by the user is extended to be displayed as the main screen, and the split view displayed on the same layer is reduced to be displayed as the sub-screen. Thereafter, the controller 100 performs a split view service by controlling the main screen and the sub screen as described above in step 321.

In the state above, the user may change the app which is displayed as the sub screen to the app of the main screen. In this case, the user may generate a screen conversion request command by generating a touch interaction which is set in the sub screen display area, or by generating the touch interaction which moves the boundary surface. When the screen conversion request is generated through the first input unit 140 or the second input unit 150, the controller detects this request in step 323, changes the selected sub screen to the main screen, and changes the display area of the app displayed as the main screen to the sub screen in step 325.

In other words, the controller 100 displays the app of the sub screen which was selected at the time of the screen conversion request as the main screen, and displays other remaining apps of the split view as the sub screen. Thereafter, the controller 100 returns to step 321 and repeatedly performs the split view service.

When a termination command is generated in the state described above, the controller 100 detects the termination command in step 327 and performs the termination processing corresponding to the termination command in step 329. Here, the termination command may be a command language for changing the display area of the app which is displayed as the main screen and the sub screen to the split view having the display area of the same size, or a command language for releasing the split view display function.

As described above, the controller 100 displays a number, N, of Apps as a split view on a single layer. Here, when the user selects the apps (e.g., two or more apps) which will be used as a package or calls the App in the App, a package app is automatically set, or the apps which will be used as a package is selected by a manufacturer and/or the user. When selecting a desired App display area (e.g., by tapping on the display unit) which is located on a top and a bottom (or a left and a right) in the state where a plurality of apps are displayed in the split view as above, the controller 100 adjusts a layout so that an area where a selected App is are displayed may be located in the middle of the display unit 130 and displayed as the main screen.

Here, a selection of the App to be displayed as the main screen may be executed in various methods. First, the user may select the App display area of the split view (e.g., by double tapping with at least two fingers on the display unit). In this case, the controller 100 controls the split view of the display unit 130, and adjusts the layout to make the size of the selected App bigger and other Apps to be smaller, and re-selects (i.e., by double tapping the display screen) the same App to restore to the previous state.

Second, when the user moves (for example, a drag) to an intended direction after selecting a boundary (for example, press after holding) between the Apps displayed in the split view, the controller 100 extends the display area size of the App to the drag direction on the display unit 130, and adjusts the layout so that the display area of the App located in the original place becomes small. Here, a non-adjacent area to the boundary surface of the split view is fixed.

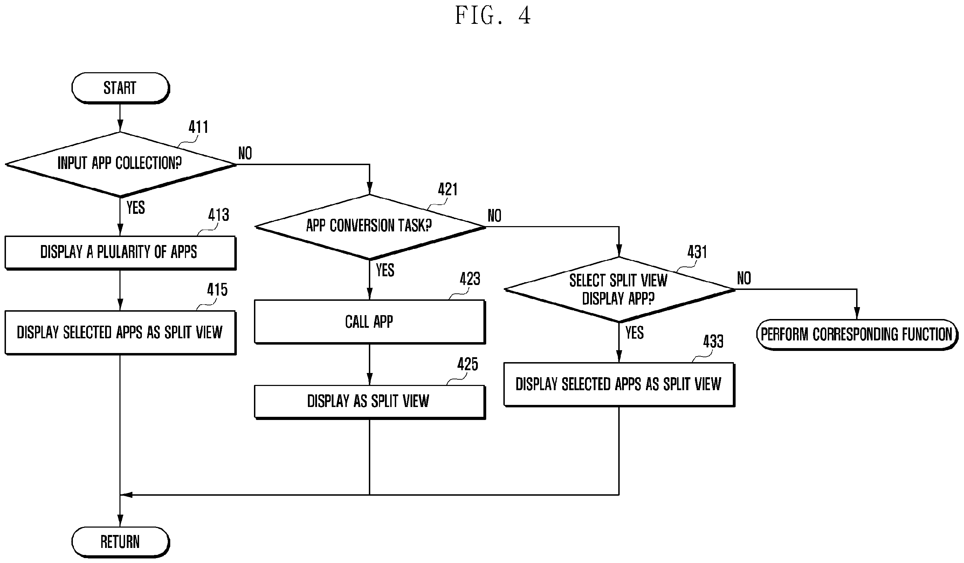

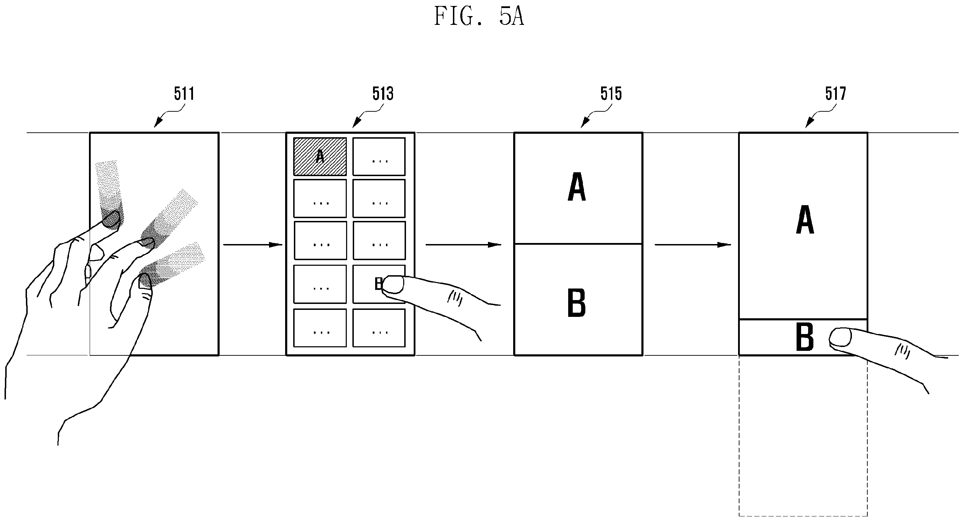

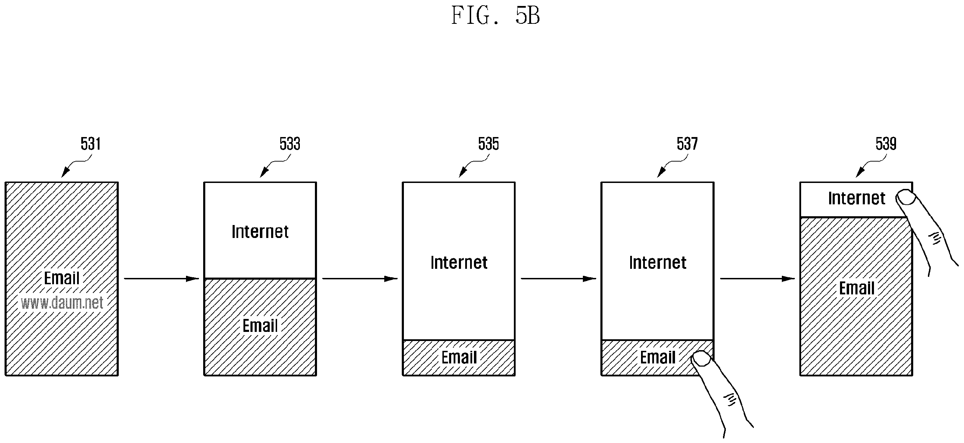

FIG. 4 is a flowchart illustrating a procedure of setting a split view according to an exemplary embodiment of the present disclosure, and FIGS. 5A and 5B are diagrams illustrating a procedure of setting a split view according to an exemplary embodiment of the present disclosure. Here, the diagrams for FIGS. 5A and 5B are configured as an exemplary embodiment of a 1/2 Split, however, have the same structure in 1/N Split.

Referring to FIGS. 4-5B, the user may select the desired apps among the apps in the portable device and may display the selected app in the split view. Here, in order to select the apps to be displayed in the split view, it is desirable for the user to collect and display the apps first. Here, the touch interaction for collecting the apps in order to display in the split view may be set. In an exemplary embodiment of the present disclosure, it is assumed that the app collection touch interaction is a pinch close.

Therefore, when performing a pinch close operation as shown in 511 of FIG. 5A, the first input unit 140 detects the pinch close operation and outputs to the controller 100, and the controller 100 detects this in step 411, and displays a plurality of Apps 513 on the display unit 130 in step (413. Here, the plurality of apps 513 of FIG. 5A being displayed may be currently running applications, recent applications, or an entire app (for example, an application displaying on a home screen). When the user selects a specific App while the collected apps are displayed as above, the controller 100 displays the selected apps on the display unit 130 in the split view 515 in step 415. Thereafter, the apps being displaying in the split view as above may be displayed as the main screen and the sub screen 517 according to the user's selection.

Second, the specific apps may have an app conversion task information which is required to convert to other apps. For example, in a case of a chatting app (e.g., chat on an application), it may be linked to a multimedia app (e.g., a gallery application) so as to transmit the information, such as a picture during the chatting, and may be linked to an internet app by a hyperlink information in a case of an email app. Therefore, when the app which has an app conversion task information as shown in 531 of FIG. 5B is selected, the controller 100 detects that the app has the app conversion task information in step 421, and calls the app of the app conversion task information in step 423. Thereafter, in step 425, the controller 100 displays the selected app and the app of the app conversion task information in the split view on the display unit 130 as shown in 533 of FIG. 5B.

Thereafter, the controller 100 may extend the display area of the selected area to be displayed as the main screen as shown in 535-539 of FIG. 5B according to the user's selection, or may convert (change) the app being displayed as the main screen to the app being displayed as the sub screen.

Third, a manufacturer or a user may set the specific apps to be displayed in the split view. In this case, the information of the apps which are set in the split view may be stored by the controller 100. In addition, when the corresponding app is selected, the controller 100 detects that it is a selection of the split view display app in step 431, and displays the apps set in response to the corresponding app in the split view in step 433.

Here, the display example may be performed in a similar method to FIG. 5B. The apps set by the manufacturer or the user may be an app displaying a text (e.g., an e-book application), a dictionary app, a map app, a web app, a note app, and the like. Here, the note app is an app which may perform a memo or a note by using a pen or a keypad, and may write down the necessary information during the performance of the app, such as a text, a scheduler and/or multimedia, and the like.

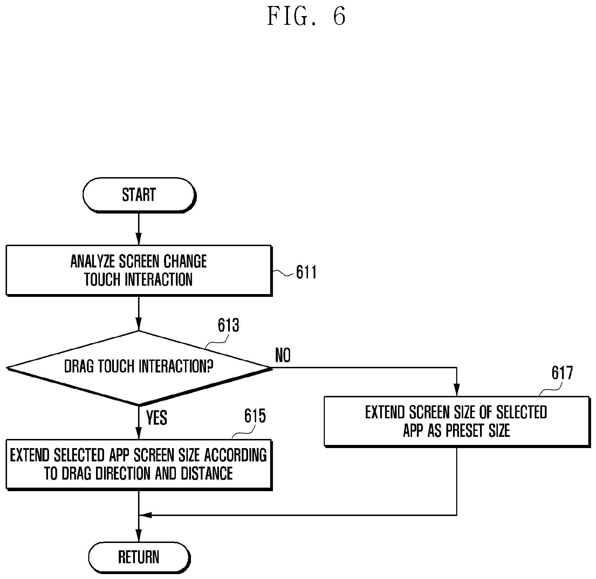

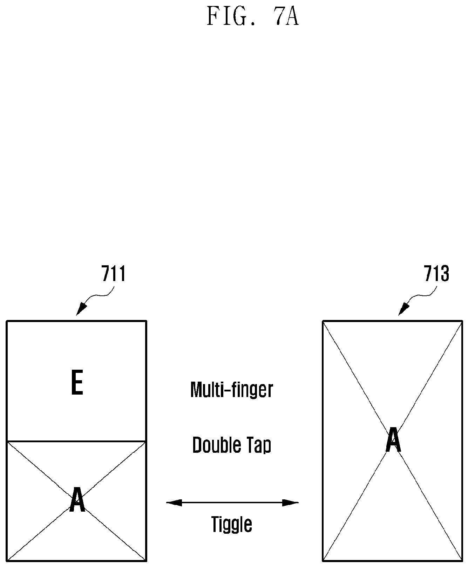

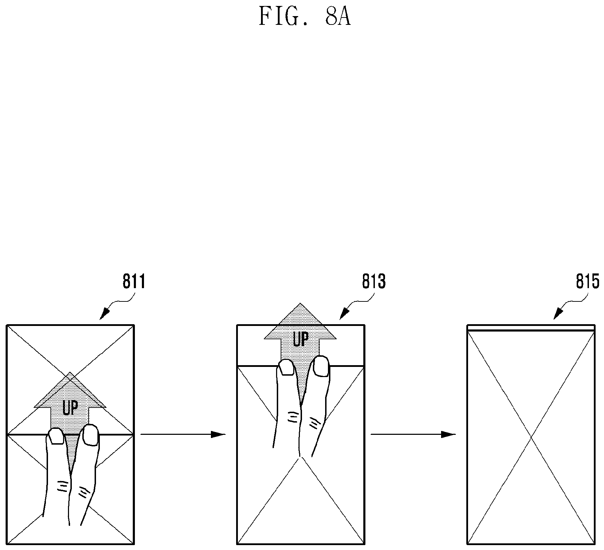

FIG. 6 is a flowchart illustrating a procedure of changing a screen according to a screen change request according to an exemplary embodiment of the present disclosure, FIGS. 7A through 7C area diagrams illustrating procedures of controlling a main screen of an app which is selected with a size set according to an exemplary embodiment of the present disclosure, and FIGS. 8A through 8D are diagrams illustrating procedures of variably setting a size of a main of a selected app according to an exemplary embodiment of the present disclosure.

Referring to FIGS. 6 through 8D, at the time of a screen change request, the controller 100 analyzes a screen change touch interaction which is generated by the user in step 611. Here, the touch interaction will be described by assuming as a tap interaction and a drag interaction as described in FIG. 2. Here, it is assumed that the tap interaction is by using at least two fingers, and double taps an app area in order to display the main screen. Therefore, when the double tap is detected, the controller 100 detects the double tap in step 613, extends the selected app screen size to the set size, and reduces the display area of other apps being displaying in the split view to the corresponding size in step 617.

FIG. 7A is a diagram illustrating an example of a single app displayed on two split views. In FIG. 7A, the area where 711 and an app are displayed is configured as an E area (empty area) and an A area where an app is displayed, and when a double tap is generated at the A area, the controller 100 displays the E area where the app is displayed as the main screen of the A app as illustrated in 713 of FIG. 7A in step 617.

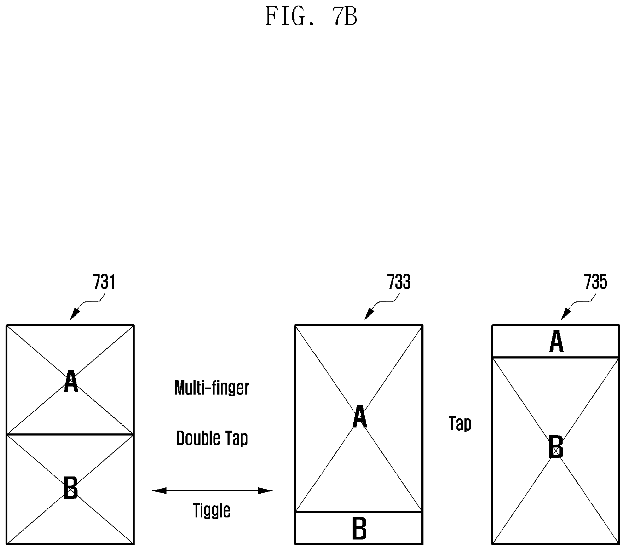

FIG. 7B is a diagram illustrating an example in which two apps are displayed on two split views. When a double tap is generated at the display area of the A app as shown in 731 of FIG. 7B, the controller 100 extends to display the display area of the A app as the set size on the main screen and reduces to display the screen area of the B app as a corresponding size to the sub screen.

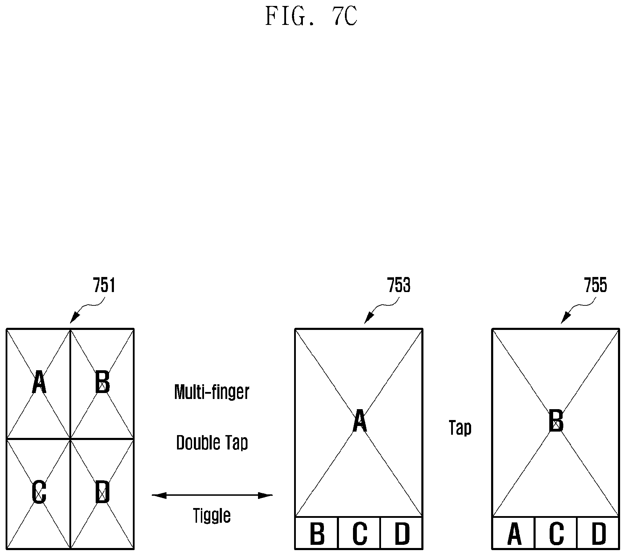

In addition, in the state of being displayed as illustrated in 733, when the user performs the double tap on the B app display area of the sub screen, the controller 100 converts the screen and, as illustrated in 735, extends the B app to the set size and displays it as the main screen and displays A app as the sub screen. However, the split view may be split to display more than three apps. FIG. 7C is a diagram illustrating a procedure of displaying four apps in the split view. When the double tap is generated in the A app display area while displaying four apps in the split view as shown in 751 of FIG. 7C, the controller 100 extends the display area of the A app to the set size to be displayed as the main screen as shown in 753, and divides the remaining B-D apps to be displayed in the sub screen area of the set size.

Here, when performing the double tap to the specific app (here, assumed as B app) display area among the apps which are displayed on the sub screen area, the controller 100, extends the selected app (here, assumed as B app) to be displayed as the main screen in step 617 as illustrated in 755, and displays the app (here, may be A app) which is displayed as the main screen on the sub screen area. However, when a drag is generated in the screen boundary area, the controller 100 detects the drag in step 613 and extends the main screen size of the corresponding app to the drag direction up to the position where the drag operation is stopped in step 615.

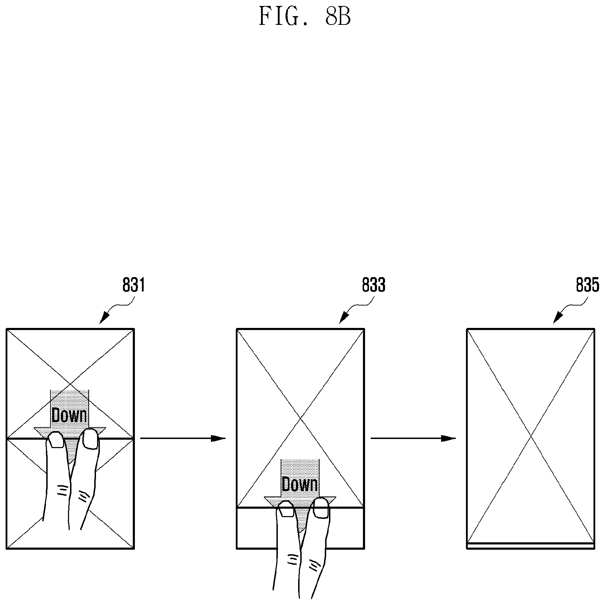

A method for controlling the screen size of the selected app in step 615 may be performed as an identical method to FIGS. 8A to 8D. FIG. 8A is a diagram illustrating an example of performing the drag to an upward direction on the boundary surface of the split view, and FIG. 8B is a diagram illustrating an example of performing the drag to a downward direction on the boundary of the split view.

When the user drags to the upward direction from the boundary surface of the split view 811 of FIG. 8A, the controller 100 extends the display area of the app located in the lower side to the upper side direction as illustrated in 813, and the size of the sub screen is determined in the corresponding position when the drag is stopped in step 615. Here, when the user drags up to the end of the upper side of the display unit 130, the controller 100 sets the entire screen of the display unit 130 as the display area of the selected app as illustrated in 815 of FIG. 8A.

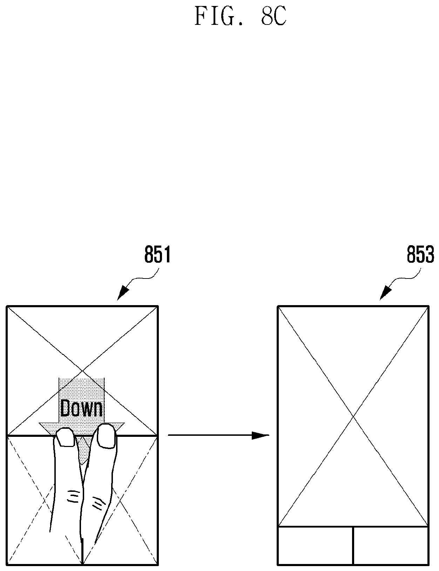

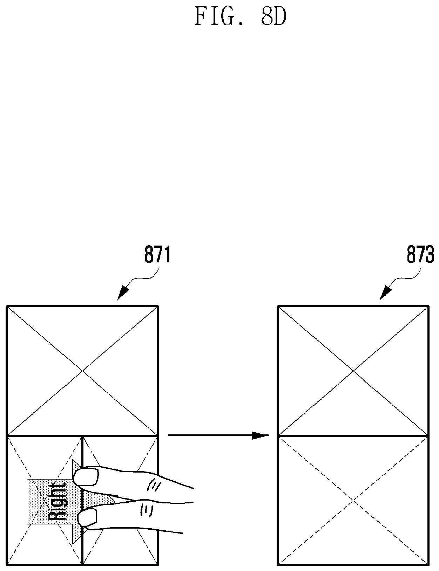

Exemplary displays 831 through 835 of FIG. 8B are the drag operations to the downward direction which are operating opposite to FIG. 8A. FIGS. 8C and 8D illustrate displaying the apps on three split views as illustrated in 851 and 871, and when the drag is detected from the boundary surface, the controller 100 extends the display area of the corresponding app to the drag direction as illustrated in 853 and 873, and reduces the display area of other apps of the split view to the corresponding size. Here, the app boundary area of the split views is increased as the split views are increased, and accordingly, a size of a portrait screen may be extended by an up and down drag of the split view as illustrated in 851 in a landscape area of the boundary area, and a landscape size of the split view may be extended by a left and right drag of the split view as illustrated in 871 in a portrait area.

FIGS. 5A and 5B, FIGS. 7A through 7C, and FIGS. 8A and 8B illustrate an exemplary portrait split view. However, it may be performed identically to an exemplary landscape split view. In this case, the main screen may be extended from the left to the right, or from the right to the left direction, and a drag operation may be performed from the left to the right, or from the right to the left direction even in the case of an extension by a drag and drop.

In addition, FIGS. 5A and 5B, FIGS. 7A through 7C, and FIGS. 8A and 8B illustrate a case where the split views are two, however, it is possible to obtain the same effect even in cases of three or more split views.

As described above, the portable device may control the size of the split view displaying a plurality of apps by the user's selection. Here, the split view may be selected by the user, and here, the user may set two or more apps among a running app or an entire app. Here, assuming that two apps are displayed as the portrait split view, the B app is provided to the bottom of the display unit 130 during execution of the A app, and the A app and the B app may be used interchangeably.

Looking specifically at such operations, first, when the App is called in the App, for example, when operation is performed because a conversion from A app to another A app during the use of the A app is needed, it may convert the A app by providing an upper/bottom within one screen. Here, when a conversion by a task is needed, the app conversion task information may be an Insert/Attach/Link/Preview/Browse function.

For example, when the conversion to a link between an email app and an Internet is needed, or the link is preset by a user/manufacturer, two Apps, which are separated but a synergistic effect is increased at the time of using together, may be provided as the upper/lower end within one screen. Here, as described above, the split view displays N (N=2,3,4,...) numbers of an App on a single layer, and here, displays as the main screen having a relatively large display area and displays other apps on the same layer as the sub screen having a small display area by selecting the specific app. Here, a method of selecting an App to be displayed as the main screen may be performed by performing a touch interaction (e.g., a double tapping with a at least two fingers) to select the app display area, or by performing a drag and drop operation to extend the display area after performing a hold and press in the boundary of the split view.

As described above, a screen display method in the portable device displays a plurality of applications as a split view by corresponding to the split display area of the display unit, and extends the display area of the application selected in the split view for display as the main screen, and reduces the display area of the unselected application for display as the sub screen. In addition, when selecting the sub screen during a screen change service, the application of the sub screen is displayed as the main screen and the application of the main screen is converted into the sub screen.

Here, the screen change method in the portable device may use the following two exemplary methods as illustrated in FIG. 2.

First, when looking at a first exemplary method, the controller 100 extends an application display area up to a drop position to the drag direction to be displayed as the main screen when the touch interaction of the drag and drop is detected from a boundary surface of the split view through the first input unit 140 and/or the second input unit 150, and reduces to display the application display area displaying on the corresponding display area as the sub screen.

Here, when the screen being displayed on the display unit 130 is a portrait split view display mode, the controller 100 extends the main screen to the downward or to the upward direction by analyzing the drag direction which is performing to the upward or to the downward direction. In addition, when the screen being displaying on the display unit 130 is a landscape split view display mode, the controller 100 extends the main screen to the right or to the left side by analyzing the drag direction which is performed to the left or to the right side.

When looking at a second screen change method, the controller 100 extends to display the application which is selected during a touch interaction set through the first input unit 140 and/or the second input unit 150 in the application display area of the split view, and controls to display the application of another split view by reducing to a minimum display area size. Here, the touch interaction may be a double tap using at least two fingers.

The apparatus and method for controlling the split view in the portable device of exemplary embodiments of the present disclosure provide an operation method to change an area of the Apps which are aligned as a plurality of split screens (1/N Split window) in a Multi window environment of a portable device to a layout desired by a user with a single operation. Accordingly, the method has an advantage of reducing a burden and a hassle for the operation thereof, and may display various App usage types by a free adjustment of the App area.

## Claims

1. A method of changing a content display area on a screen of a portable device, the method comprising:
displaying (413) a plurality of items, each of the plurality of items corresponds to an application in the portable device;
receiving selection of a first item corresponding to a first application and selection of a second item corresponding to a second application, sequentially; and
switching from displaying the plurality of items to displaying (313) the first application and the second application as a split view, the first application being displayed on a first area of the display unit and the second application being displayed on a second area of the display unit, **characterised in** the that the method further comprises:
detecting (317) a touch interaction on the first area to control a size of the first area and the second area; and
upon detection of the touch interaction (317), extending (319) to a predetermined size the first area of the first application from the split view to be displayed as a main screen, and simultaneously reducing the second area of the second application to be displayed as a sub screen.

2. The method of claim 1, further comprising:
displaying (325) the second application of the sub screen to be displayed as a main screen upon selection of the sub screen, and converting the first application of the main screen into the sub screen.

3. The method of claim 2, further comprising:
extending (615) a display area of an application in a drag direction up to a drop position to be displayed as a main screen when a drag and drop operation is detected from a boundary surface of the split view; and
reducing a display area of an application which is displayed on a corresponding display area to be displayed as a sub screen.

4. The method of claim 3, further comprising:
extending a main screen to a downward or an upward direction by a drag direction which is performed to the upward or downward direction when the screen is displayed as a portrait split view.

5. The method of claim 4, further comprising:
extending a main screen to a right or left side by a drag direction which is performed to the left or right direction when the screen is displayed as a landscape split view.

6. The method of claim 2, wherein the displaying of the plurality of applications as a split view comprises:
displaying applications to be displayed as a split view when a set touch interaction is detected; and
displaying the applications by setting a split view according to a number of the selected applications on an identical layer of a display unit.

7. The method of claim 6, wherein the application is one of a running application, a recent application, and an entire application.

8. The method of claim 6, wherein the displaying of the plurality of applications as a split view comprises:
displaying an application to be converted by setting a split view in an identical layer of a display unit when a running application has a task of converting to another application.

9. The method of claim 8, wherein the task is one of an insert function, an attach function, a link function, a preview function, and a browser function.

10. An apparatus for changing a content display area on a screen of a portable device, the apparatus comprising:
a display unit (130);
an input unit (140, 150); and
a controller (100) configured to:
control the display unit (130) to display a plurality of items, each of the plurality of items corresponding to an application in the portable device;
receive selection of a first item corresponding to a first application and selection of a second item corresponding to a second application, sequentially; and
control the display unit (130) to switch from displaying the plurality of items to displaying the first application and the second application as a split view, the first application being displayed on a first area of the display unit and the second application being displayed on a second area of the display unit, **characterised in that** the controller (100) is further configured to:
in response to detecting a touch interaction on the first area for controlling a size of the first area and the second area, extend to a predetermined size the display area of the first application selected from the split view to be displayed as a main screen, and simultaneously reduce the display area of the second application to be displayed as a sub screen.

11. The apparatus of claim 10, wherein the controller (100) controls the second application of the sub screen to be displayed as a main screen in the display unit (130) upon selection of the sub screen, and controls to display the first application of the main screen by converting into the sub screen.

12. The apparatus of claim 11, wherein the controller (100) extends a display area of an application in a drag direction up to a drop position to be displayed as a main screen when a drag and drop operation is detected from a boundary surface of the split view through the input unit (140, 150), and reduces a display area of an application which is displayed on a corresponding display area to be displayed as a sub screen.

13. The apparatus of claim 12, wherein the controller (100) extends a main screen to a downward or an upward direction by a drag direction which is performed to the upward or downward direction when the screen is displayed as a portrait split view, and extends a main screen to a right or left side by a drag direction which is performed to the left or right direction when the screen is displayed as a landscape split view.

## Patentansprüche

1. Verfahren zum Ändern eines Inhaltsanzeigebereichs auf einem Bildschirm eines tragbaren Geräts, wobei das Verfahren Folgendes umfasst:
Anzeigen (413) einer Vielzahl von Elementen, wobei jedes der Vielzahl von Elementen einer Anwendung im tragbaren Gerät entspricht;
nacheinander Empfangen einer Auswahl eines ersten Elements, das einer ersten Anwendung entspricht, und einer Auswahl eines zweiten Elements, das einer zweiten Anwendung entspricht; und
Umschalten vom Anzeigen der Vielzahl von Elementen zum Anzeigen (313) der ersten Anwendung und der zweiten Anwendung als geteilte Ansicht, wobei die erste Anwendung an einem ersten Bereich der Anzeigeeinheit angezeigt wird und die zweite Anwendung an einem zweiten Bereich der Anzeigeeinheit angezeigt wird, **dadurch gekennzeichnet, dass** das Verfahren ferner Folgendes umfasst:
Erkennen (317) einer Berührungsinteraktion am ersten Bereich, um eine Größe des ersten Bereichs und des zweiten Bereichs zu steuern; und
nach Erkennung der Berührungsinteraktion (317), Erweitern (319) des ersten Bereichs der ersten Anwendung, auf eine vorbestimmte Größe, aus der geteilten Ansicht, um als Hauptbildschirm angezeigt zu werden, und gleichzeitig Reduzieren des zweiten Bereichs der zweiten Anwendung, um als Unterbildschirm angezeigt zu werden.

2. Verfahren nach Anspruch 1, ferner umfassend:
Anzeigen (325) der zweiten Anwendung des Unterbildschirms, um als Hauptbildschirm nach Auswahl des Unterbildschirms angezeigt zu werden, und Umwandeln der ersten Anwendung des Hauptbildschirms in den Unterbildschirm.

3. Verfahren nach Anspruch 2, ferner umfassend:
Erweitern (615) eines Anzeigebereichs einer Anwendung in einer Ziehrichtung bis zu einer Ablegeposition, um als Hauptbildschirm angezeigt zu werden, wenn der Zieh-und-AblegeVorgang von einer Grenzfläche der geteilten Ansicht erkannt wird; und
Reduzieren eines Anzeigebereichs einer Anwendung, welche an einem entsprechenden Anzeigebereich angezeigt wird, um als Unterbildschirm angezeigt zu werden.

4. Verfahren nach Anspruch 3, ferner umfassend:
Erweitern eines Hauptbildschirms zu einer Abwärts- oder einer Aufwärtsrichtung durch eine Ziehrichtung, welche in der Aufwärts- oder Abwärtsrichtung ausgeführt wird, wenn der Bildschirm als geteilte Hochformatansicht angezeigt wird.

5. Verfahren nach Anspruch 4, ferner umfassend:
Erweitern eines Hauptbildschirms zu einer rechten oder linken Seite durch eine Ziehrichtung, welche zur linken oder rechten Richtung ausgeführt wird, wenn der Bildschirm als geteilte Querformatansicht angezeigt wird.

6. Verfahren nach Anspruch 2, wobei das Anzeigen der Vielzahl von Anwendungen als geteilte Ansicht Folgendes umfasst:
Anzeigen von Anwendungen, um als geteilte Ansicht angezeigt zu werden, wenn eine festgelegte Berührungsinteraktion erkannt wird; und
Anzeigen der Anwendungen durch Festlegen eines geteilten Bildschirms entsprechend einer Anzahl der ausgewählten Anwendungen auf einer identischen Lage einer Anzeigeeinheit.

7. Verfahren nach Anspruch 6, wobei die Anwendung eine von einer laufenden Anwendung, eine neueren Anwendung und einer gesamten Anwendung ist.

8. Verfahren nach Anspruch 6, wobei das Anzeigen der Vielzahl von Anwendungen als geteilte Ansicht Folgendes umfasst:
Anzeigen einer Anwendung, die umgewandelt werden soll, durch Festlegen einer geteilten Ansicht in einer identischen Lage einer Anzeigeeinheit, wenn eine laufende Anwendung eine Aufgabe zur Umwandlung in eine andere Anwendung aufweist.

9. Verfahren nach Anspruch 8, wobei die Aufgabe eine von einer Einfügefunktion, einer Anhängefunktion, einer Verknüpfungsfunktion, einer Vorschaufunktion und einer Browser-Funktion ist.

10. Einrichtung zum Ändern eines Inhaltsanzeigebereichs auf einem Bildschirm eines tragbaren Geräts, wobei die Einrichtung Folgendes umfasst:
eine Anzeigeeinheit (130);
eine Eingabeeinheit (140, 150); und
einen Controller (100), der konfiguriert ist, um:
die Anzeigeeinheit (130) zu steuern, um eine Vielzahl von Elementen anzuzeigen, wobei jedes der Vielzahl von Elementen einer Anwendung im tragbaren Gerät entspricht;
eine Auswahl eines ersten Elements, das einer ersten Anwendung entspricht, und eine Auswahl eines zweiten Elements, das einer zweiten Anwendung entspricht, nacheinander zu empfangen; und
die Anzeigeeinheit (130) zu steuern, um vom Anzeigen der Vielzahl von Elementen zum Anzeigen der ersten Anwendung und der zweiten Anwendung als geteilte Ansicht umzuschalten, wobei die erste Anwendung an einem ersten Bereich der Anzeigeeinheit angezeigt wird und die zweite Anwendung an einem zweiten Bereich der Anzeigeeinheit angezeigt wird, **dadurch gekennzeichnet, dass** der Controller (100) ferner konfiguriert ist, um:
als Reaktion auf das Erkennen einer Berührungsinteraktion am ersten Bereich zur Steuerung einer Größe des ersten Bereichs und des zweiten Bereichs, den Anzeigebereich der aus der geteilten Ansicht ausgewählten ersten Anwendung auf eine vorbestimmte Größe zu erweitern, um als Hauptbildschirm angezeigt zu werden, und gleichzeitig den Anzeigebereich der zweiten Anwendung zu reduzieren, um als Unterbildschirm angezeigt zu werden.

11. Einrichtung nach Anspruch 10, wobei der Controller (100) die zweite Anwendung des Unterbildschirms steuert, um als Hauptbildschirm in der Anzeigeeinheit (130) nach Auswahl des Unterbildschirms angezeigt zu werden, und steuert, um die erste Anwendung des Hauptbildschirms durch Umwandeln in den Unterbildschirm anzuzeigen.

12. Einrichtung nach Anspruch 11, wobei, der Controller (100) einen Anzeigebereich einer Anwendung in einer Ziehrichtung bis zu einer Ablegeposition erweitert, um als Hauptbildschirm angezeigt zu werden, wenn ein Zieh-und-Ablegevorgang von einer Grenzfläche der geteilten Ansicht durch die Eingabeeinheit (140, 150) erkannt wird, und einen Anzeigebereich einer Anwendung, welche an einem entsprechenden Anzeigebereich angezeigt wird, reduziert, um als Unterbildschirm angezeigt zu werden.

13. Einrichtung nach Anspruch 12, wobei der Controller (100) einen Hauptbildschirm zu einer Abwärts- oder einer Aufwärtsrichtung durch eine Ziehrichtung erweitert, welche in der Aufwärts- oder Abwärtsrichtung ausgeführt wird, wenn der Bildschirm als geteilte Hochformatansicht angezeigt wird, und einen Hauptbildschirm zu einer rechten oder linken Seite durch eine Ziehrichtung erweitert, welche zur linken oder rechten Richtung ausgeführt wird, wenn der Bildschirm als geteilte Querformatansicht angezeigt wird.

## Revendications

1. Procédé de modification d'une zone d'affichage de contenu sur un écran d'équipement portable, le procédé comprenant :
l'affichage (413) d'une pluralité d'éléments, chacun de la pluralité d'éléments correspond à une application dans l'équipement portable ;
la réception d'une sélection d'un premier élément correspondant à une première application et la sélection d'un deuxième élément correspondant à une deuxième application, de manière séquentielle ; et
le basculement depuis l'affichage de la pluralité d'éléments vers l'affichage (313) de la première application et la deuxième application en tant que vue divisée, la première application étant affichée sur une première zone de l'unité d'affichage et la deuxième application étant affichée sur une deuxième zone de l'unité d'affichage, **caractérisé en ce que** le procédé comprend en outre :
la détection (317) d'une interaction de touche sur la première zone pour commander une taille de la première zone et de la deuxième zone ; et
lors de la détection de l'interaction de touche (317), le déploiement (319) jusqu'à une taille prédéterminée de la première zone de la première application depuis la vue divisée devant être affichée en tant qu'écran principal, et simultanément la réduction de la deuxième zone de la deuxième application devant être affichée en tant que sous-écran.

2. Procédé selon la revendication 1, comprenant en outre :
l'affichage (325) de la deuxième application du sous-écran devant être affiché en tant qu'écran principal lors de la sélection du sous-écran, et la conversion de la première application de l'écran principal dans le sous-écran.

3. Procédé selon la revendication 2, comprenant en outre :
le déploiement (615) d'une zone d'affichage d'une application dans une direction de glisser jusqu'à une position de déposer devant être affichée en tant qu'écran principal quand une opération de glisser-déposer est détectée depuis une surface de limite de la vue divisée ; et
la réduction d'une zone d'affichage d'une application qui est affichée sur une zone d'affichage correspondante devant être affichée en tant que sous-écran.

4. Procédé selon la revendication 3, comprenant en outre :
le déploiement d'un écran principal dans une direction vers le bas ou vers le haut par une direction de glisser qui est exécutée dans la direction vers le haut ou vers le bas quand l'écran est affiché en tant que vue portait divisée.

5. Procédé selon la revendication 4, comprenant en outre :
le déploiement d'un écran principal vers un côté gauche ou un côté droit par une direction de glisser qui est exécutée dans la direction gauche ou droite quand l'écran est affiché en tant que vue paysage divisée.

6. Procédé selon la revendication 2, dans lequel l'affichage de la pluralité d'applications en tant que vue divisée comprend :
l'affichage d'applications devant être affichées en tant que vue séparée quand une interaction de touche définie est détectée ; et
l'affichage des applications en définissant une vue divisée en fonction d'un nombre des applications sélectionnées sur une couche identique d'une unité d'affichage.

7. Procédé selon la revendication 6, dans lequel l'application est l'une d'une application en cours d'exécution, une application récente et une application entière.

8. Procédé selon la revendication 6, dans lequel l'affichage de la pluralité d'applications en tant que vue divisée comprend :
l'affichage d'une application devant être convertie en définissant une vue divisée dans une couche identique d'une unité d'affichage quand une application en cours d'exécution présente une tâche de conversion vers une autre application.

9. Procédé selon la revendication 8, dans lequel la tâche est l'une d'une fonction d'insertion, une fonction de pièce jointe, une fonction de lien, une fonction de prévisualisation et une fonction de navigateur.

10. Appareil permettant la modification d'une zone d'affichage de contenu sur un écran d'équipement portable, l'appareil comprenant :
une unité d'affichage (130) ;
une unité d'entrée (140, 150) ; et
une unité de commande (100), configurée pour :
commander à l'unité d'affichage (130) d'afficher une pluralité d'éléments, chacun de la pluralité d'éléments correspondant à une application dans l'équipement portable ;
recevoir une sélection d'un premier élément correspondant à une première application et une sélection d'un deuxième élément correspondant à une deuxième application, de manière séquentielle ; et
commander à l'unité d'affichage (130) de basculer depuis l'affichage de la pluralité d'éléments vers l'affichage de la première application et la deuxième application en tant que vue divisée, la première application étant affichée sur une première zone de l'unité d'affichage et la deuxième application étant affichée sur une deuxième zone de l'unité d'affichage, **caractérisé en ce que** l'unité de commande (100) est en outre configurée pour :
en réponse à la détection d'une interaction de touche sur la première zone pour commander une taille de la première zone et de la deuxième zone, déployer jusqu'à une taille prédéterminée la zone d'affichage de la première application sélectionnée depuis la vue divisée devant être affichée en tant qu'écran principal, et simultanément réduire la deuxième zone de la deuxième application devant être affichée en tant que sous-écran.

11. Appareil selon la revendication 10, dans lequel l'unité de commande (100) commande la deuxième application du sous-écran devant être affiché en tant qu'écran principal dans l'unité d'affichage (130) lors de la sélection du sous-écran, et commande d'afficher la première application de l'écran principal par conversion dans le sous-écran.

12. Appareil selon la revendication 11, dans lequel l'unité de commande (100) déploie une zone d'affichage d'une application dans une direction de glisser jusqu'à une position de déposer devant être affichée en tant qu'écran principal quand une opération de glisser-déposer est détectée depuis une surface de limite de la vue divisée par le biais de l'unité d'entrée (140, 150), et réduit une zone d'affichage d'une application qui est affichée sur une zone d'affichage correspondante devant être affichée en tant que sous-écran.

13. Appareil selon la revendication 12, dans l'unité de commande (100) déploie un écran principal dans une direction vers le bas ou vers le haut par une direction de glisser qui est exécutée dans la direction vers le haut ou vers le bas quand l'écran est affiché en tant que vue portait divisée, et déploie un écran principal vers un côté gauche ou un côté droit par une direction de glisser qui est exécutée dans la direction gauche ou droite quand l'écran est affiché en tant que vue paysage divisée.
